# EUROPÄISCHE PATENTSCHRIFT

(11) **EP 2 805 063 B1**
(45) Veröffentlichungstag und Bekanntmachung des Hinweises auf die Patenterteilung: **16.01.2019**
(21) Anmeldenummer: 12700611.2
(22) Anmeldetag: 18.01.2012
(51) Int. Cl.: F15B 21/08, F15B 13/08

(54) **VERFAHREN ZUR KONFIGURATION EINER FLUIDSTEUEREINHEIT, COMPUTERPROGRAMMPRODUKT UND FLUIDISCHES SYSTEM**
METHOD FOR CONFIGURING A FLUID CONTROL UNIT, COMPUTER PROGRAM PRODUCT AND FLUIDIC SYSTEM
PROCÉDÉ DE CONFIGURATION D'UN MODULE DE COMMANDE FLUIDIQUE, PRODUIT LOGICIEL INFORMATIQUE ET SYSTÈME FLUIDIQUE

(43) Veröffentlichungstag der Anmeldung: 26.11.2014
(73) Patentinhaber: Festo AG & Co. KG, 73734 Esslingen (DE)
(72) Erfinder: MAICHL, Martin, 73084 Salach (DE); BERNER, Michael, 73230 Kirchheim (DE)
(74) Vertreter: Patentanwälte Magenbauer & Kollegen Partnerschaft mbB
(86) Internationale Anmeldenummer: PCT/EP2012/000189
(87) Internationale Veröffentlichungsnummer: WO 2013/107466

(56) Entgegenhaltungen:
- EP-A1- 1 975 418
- WO-A1-2004/016900
- DE-A1-102007 009 677
- US-A- 5 182 908

## Beschreibung

Die Erfindung betrifft ein Verfahren zur Konfiguration einer Fluidsteuereinheit, die zur Ansteuerung von Fluidsteuerventilen für eine fluidisch betreibbare Bewegungseinrichtung ausgebildet ist. Ferner betrifft die Erfindung ein Computerprogrammprodukt und ein fluidisches System.

Aus der DE 10 2007 009 677 A1 ist eine fluidtechnische Vorrichtung zur Ansteuerung eines Aktors oder einer Ventilanordnung bekannt, die mindestens einen elektrischen Kontakt enthaltenden Anschluss für eine Fluidleitung umfasst, in der ein Kanal für ein Druckmedium zur fluidtechnischen Versorgung oder Betätigung der Vorrichtung und mindestens ein elektrischer Leiter zur elektrischen Versorgung mindestens einer elektrischen Komponente der Vorrichtung mit elektrischer Energie angeordnet ist. Bei der Vorrichtung ist vorgesehen, dass die mindestens eine elektrische Komponente eine Kommunikationseinrichtung zur drahtlosen Datenkommunikation umfasst.Die EP 1 975 418 A1 offenbart eine Ventilbatterie mit mehreren in einer Reihenrichtung nebeneinander angeordneten Ventilmodulen zur fluidtechnischen Ansteuerung fluidtechnischer Geräte, und mit einem durch die Ventilbatterie gesteuerten fluidtechnischen Gerät, das eine von der Ventilbatterie separate Baueinheit bildet und das eine Empfangseinrichtung aufweist, die zum Empfangen von das mindestens eine fluidtechnische Gerät kennzeichnenden Geräte-Identifikationsdaten ausgestaltet ist, die eine Identdaten-Sendeeinrichtung sendet, und dass die Empfangseinrichtung zum Weiterleiten der Geräte-Identifikationsdaten mit einer Steuerungseinrichtung zur Steuerung des fluidtechnischen Geräts verbindbar ist.

Aus der US 5,182,809 A ist ein Dual-Mikrorechnersystem mit einem Cache-Untersystem bekannt, dessen Leistung unter bestimmten Umständen verbessert werden kann, indem eine programmierbare Kontrolle über eine Blockierfunktion vorgegeben ist. Insbesondere wird eine zusätzliche Logik zwischen dem Sperrsignalausgang der CPU und dem Sperrsignaleingang des Cache-Controllers eingekoppelt. Ein Steuerbit von einem Eingangs-/Ausgangsanschluss (I/O-Port) ist mit einem zweiten Eingang der zusätzlichen Logik verbunden. Mit einem ersten Zustand des Steuer-Bit ermöglicht es die Logik dem Sperrsignaleingang dem Sperrsignalausgang zu folgen. Mit einem zweiten Zustand des Steuer-Bits wird der Sperrsignaleingang unabhängig vom Zustand des Sperrsignalausgangs abgeschaltet.

Die WO2004/016900 offenbart ein fahrbares Arbeitsgerät mit einem Werkzeugkopf sowie damit verbundenen Hydraulikmotoren oder Zylinder/Kolbeneinheiten zur Steuerung der Bewegungsabläufe seiner Hebel und Werkzeuge. Die hydraulischen Kraftmaschinen werden durch Proportionalventile mit Stromsteuerung durch ein steuerbares Strom-Steuergerät angesteuert. Das Strom-Steuergerät ist mit einem Logikbaustein zu einer Baueinheit vereinigt, die außerhalb eines Rechnergehäuses in räumlicher Nähe des zugeordneten Proportionalventils oder an diesem angeordnet ist. Jede Baueinheit besitzt einen Stromanschluss, welcher mit einer Spannungsquelle verbindbar und mit dem Logikbaustein des Steuerbausteins verbunden ist.

Die Ansteuerung des Rechners kann mittels tragbarem Funkgerät geschehen.

Ein der Anmelderin bekanntes, druckschriftlich nicht niedergelegtes Verfahren zur Konfiguration einer Fluidsteuereinheit sieht vor, dass ein Benutzer zunächst die verfügbaren Komponenten, also insbesondere die Fluidsteuereinheit, die Fluidsteuerventile und die Bewegungseinrichtung, einzeln identifiziert. In nachfolgenden Schritten werden die für den gewünschten Bewegungsablauf der Bewegungseinrichtung Schalt- und/oder Stellzeitpunkte für die einzelnen Fluidsteuerventile vom Benutzer in ein Programmiergerät eingegeben und anschließend vom Programmiergerät als Steuer- und/oder Regelungsparameter auf die Fluidsteuereinheit übertragen. Für diese Programmierung muss der Benutzer, insbesondere bei komplexeren Bewegungsabläufen, fundierte Kenntnisse über das Verhalten der Bewegungseinrichtung und der verwendeten Fluidsteuerventile haben.

Die Aufgabe der Erfindung besteht darin, ein Verfahren zur Konfiguration einer Fluidsteuereinheit sowie ein Computerprogrammprodukt und ein fluidisches System bereitzustellen, die auch einem ungeübten Benutzer eine rasche und zuverlässige Konfigurationsdurchführung ermöglichen.

Diese Aufgabe wird für ein Verfahren zur Konfiguration einer Fluidsteuereinheit gemäß der eingangs genannten Art mit den Merkmalen des Anspruchs 1 gelöst. Hierbei sind die nachfolgenden Schritte vorgesehen:
Bereitstellen von Informationen über die Fluidsteuereinheit und über eine von der Fluidsteuereinheit anzusteuernde Bewegungseinrichtung und über mit der Bewegungseinrichtung verbundene Fluidsteuerventile an eine Verarbeitungseinrichtung.

Ermitteln und Anzeigen von möglichen Grundzuständen der Bewegungseinrichtung und/oder von möglichen Bewegungsabläufen für die Bewegungseinrichtung anhand der bereitgestellten Informationen über die Fluidsteuereinheit und die Bewegungseinrichtung und die Fluidsteuerventile.

Auswählen eines Grundzustands der Bewegungseinrichtung und/oder eines Bewegungsablaufs durch einen Benutzer mittels Eingabe an der Verarbeitungseinrichtung.

Erstellen und Übertragen einer für den ausgewählten Grundzustand der Bewegungseinrichtung und/oder den ausgewählten Bewegungsablauf spezifischen Konfigurationsdatei von der Verarbeitungseinrichtung an die Fluidsteuereinheit, wobei die Konfigurationsdatei Steuer- und/oder Regelungsparameter für die Ansteuerung der Fluidsteuerventile zur Einstellung des ausgewählten Grundzustands für die Bewegungseinrichtung und/oder zur Durchführung des ausgewählten Bewegungsablaufs umfasst. Verwenden der Steuer- und/oder Regelungsparameter aus der Konfigurationsdatei in der Fluidsteuereinheit zur Ansteuerung der Fluidsteuerventile zur Einstellung des ausgewählten Grundzustands der Bewegungseinrichtung und/oder zur Ausführung des ausgewählten Bewegungsablaufs.

Die Anzeige von möglichen Grundzuständen der Bewegungseinrichtung für die Fluidsteuerventile und/oder von möglichen Bewegungsabläufen für die Bewegungseinrichtung und eine mögliche Auswahl durch den Benutzer setzt zunächst voraus, dass die Verarbeitungseinrichtung mit den entsprechenden Informationen über die Fluidsteuereinheit, die Fluidsteuerventile und die Bewegungseinrichtung versorgt wurde. Dabei kann exemplarisch vorgesehen werden, dass der Benutzer diese Informationen durch Eingabe der Typennummern der vorliegenden Komponenten bereitstellt oder die Komponenten aus einer oder aus mehreren in der Verarbeitungseinrichtung gespeicherten oder von dieser von einem anderen Ort, insbesondere einem Internetserver, abrufbaren Komponentenlisten auswählt.

In einem nachfolgenden Schritt werden von der Verarbeitungseinrichtung die möglichen Grundzustände der Bewegungseinrichtung für die Fluidsteuerventile und/oder die möglichen Bewegungsabläufe für die Bewegungseinrichtung anhand der bereitgestellten Informationen über die Fluidsteuereinheit und die Bewegungseinrichtung und die Fluidsteuerventile ermittelt und angezeigt.

Die Grundzustände der Bewegungseinrichtung, also die möglichen Stellungen, die die Bewegungseinrichtung bei der Inbetriebnahme des fluidischen Systems einnehmen könnte, basieren auf Ventilgrundzuständen. Die Ventilgrundzustände sind diejenigen Schalt- oder Stellzustände für jedes der Fluidsteuerventile, die sich bei Einschalten des die Fluidsteuereinheit, die Fluidsteuerventile und die Bewegungseinrichtung umfassenden fluidischen Systems einstellen sollen, um eine sichere Inbetriebnahme des fluidischen Systems zu gewährleisten. Im einfachsten Fall entsprechen die Ventilgrundzustände den jeweiligen Vorzugsstellungen der Fluidsteuerventile, die diese einnehmen, wenn keine Energiezufuhr, insbesondere keine Stromzufuhr, an die Fluidsteuerventile vorliegt. In der Praxis kann es hingegen erforderlich sein, dass wenigstens ein Fluidsteuerventil beim Einschaltvorgang aktiv in eine von seiner Vorzugsstellung abweichende Funktionsstellung gebracht werden muss. Hierzu ist typischerweise eine Energieversorgung, beispielsweise in Form einer Beaufschlagung mit elektrischer Energie, erforderlich, damit die Bewegungseinrichtung einen vorgebbaren Grundzustand einnimmt. Diese Bereitstellung elektrischer Energie erfolgt durch die Fluidsteuereinheit, die dementsprechend programmiert bzw. parametriert sein muss.

Diese Programmierung bzw. Parametrierung erfolgt erfindungsgemäß nach dem Schritt der Ermittlung und Anzeige der Grundzustände der Bewegungseinrichtung in der Verarbeitungseinrichtung und als Folge der Auswahl eines oder mehrerer Grundzustände der Bewegungseinrichtung durch den Benutzer. Dieser kann beispielsweise eine Eingabeeinrichtung wie eine Tastatur oder einen berührungsempfindlichen Bildschirm an der Verarbeitungseinrichtung betätigen, um die jeweils gewünschten Eingaben zur Auswahl des oder der von der Verarbeitungseinrichtung ermittelten und angezeigten Grundzustände vorzunehmen. Eine unmittelbare Programmierung oder Parametrierung der Grundzustände durch den Benutzer ist hingegen nicht vorgesehen, vielmehr erfolgt die Programmierung oder Parametrierung in einem nachfolgend näher beschriebenen Schritt, nachdem der Benutzer die Auswahl des oder der gewünschten Grundzustände mit Hilfe der Verarbeitungseinrichtung durchgeführt hat.

Im Hinblick auf die möglicherweise vorzunehmende Auswahl von Bewegungsabläufen für die Bewegungseinrichtung kann eine ähnliche Vorgehensweise vorgesehen werden. Nachdem die Komponenten des fluidischen Systems ermittelt wurden, können in einem nachfolgenden Schritt von der Verarbeitungseinrichtung anhand der den jeweiligen Komponenten zugeordneten Eigenschaften die Bewegungsabläufe ermittelt werden, die von der Bewegungseinrichtung mit Hilfe der zur Verfügung stehenden Komponentendurchgeführt werden können. Hierbei kann beispielhaft für einen pneumatischen Linearsteller wie einen Pneumatikzylinder, der eine schiebebewegliche Kolbenstange umfasst, vorgesehen sein, dass zunächst ein erster Bewegungsablauf für die Ausfahrbewegung der Kolbenstange ausgewählt wird. Hierzu kann die Verarbeitungseinrichtung dem Benutzer exemplarisch eine Reihe von unterschiedlichen Bewegungsabläufen wie beispielsweise ein ungebremstes Ausfahren, ein gebremstes Ausfahren, ein Ausfahren mit geregelter Kraft, ein zumindest nahezu kraftfreies Ausfahren zu Versuchs- und Einstellzwecken und/oder ein anfahr- und/oder endlagengedämpftes Ausfahren darstellen und beispielsweise in Form von graphischen Symbolen zur Auswahl anbieten und somit eine Auswahl durch den Benutzer ermöglichen, der hierzu keine vertieften Kenntnisse über die pneumatischen Zusammenhänge zwischen den Komponenten benötigt. In einem nachfolgenden zweiten Schritt können dann exemplarisch die Zeitspanne für den Ausfahrvorgang und die von der Kolbenstange auszuübende Kraft eingestellt werden. Für den Einfahrvorgang der Kolbenstange kann aus einer identischen oder ähnlichen Auswahl von Bewegungsabläufen ausgewählt werden. Je nach Ausgestaltung der Komponenten des fluidischen Systems können exemplarisch noch weitere Aspekte wie ein ungedämpftes oder gedämpftes Anfahren einer Zwischenposition von der Verarbeitungseinrichtung vorgegeben und vom Benutzer, beispielsweise anhand von graphischen Symbolen auf einer Anzeigeeinrichtung der Verarbeitungseinrichtung, ausgewählt werden.

In einem nachfolgenden Schritt nach der Auswahl des Grundzustands der Bewegungseinrichtung und/oder des Bewegungsablaufs durch den Benutzer mittels Eingabe an der Verarbeitungseinrichtung erfolgt in der Verarbeitungseinrichtung die Erstellung der für den ausgewählten Grundzustand der Bewegungseinrichtung und/oder den ausgewählten Bewegungsablauf spezifischen Konfigurationsdatei, die die Steuer- und/oder Regelungsparameter für die Ansteuerung der Fluidsteuerventile zur Durchführung des ausgewählten Bewegungsablaufs umfasst. Anschließend wird diese Konfigurationsdatei von der Verarbeitungseinrichtung an die Fluidsteuereinheit übertragen. Der Benutzer wird also nicht mit fluidischen Details des anzusteuernden fluidischen Systems konfrontiert, sondern kann mit Hilfe der Verarbeitungseinrichtung in einfacher Weise den für seine Anwendung passenden Grundzustand und/oder Bewegungsablauf der Bewegungseinrichtung auswählen. Sowohl die Analyse der möglichen Grundzustände und Bewegungsabläufe als auch die Parametrierung des fluidischen Systems auf Basis der ausgewählten Grundzustände und Bewegungsabläufe wird ohne weiteres Zutun des Benutzers von der Verarbeitungseinrichtung durchgeführt.

Nachfolgend stehen der Fluidsteuereinheit die Steuer- und/oder Regelungsparameter aus der Konfigurationsdatei zur Verfügung, um die Fluidsteuerventile zur Einstellung des ausgewählten Grundzustands der Bewegungseinrichtung und/oder zur Ausführung des ausgewählten Bewegungsablaufs ansteuern zu können.

Somit kann auch ein weniger erfahrener Benutzer in kurzer Zeit unter Verwendung der Verarbeitungseinrichtung eine vorgegebene Bewegungsaufgabe für die Bewegungseinrichtung mit Hilfe der Verarbeitungseinrichtung und des erfindungsgemäßen Verfahrens in die Fluidsteuereinheit einprogrammieren und somit das fluidische System in Betrieb nehmen.

Vorteilhafte Weiterbildungen des Verfahrens sind in den Unteransprüchen angegeben.

Zweckmäßig ist es, wenn die Bereitstellung von Informationen über die Fluidsteuereinheit, über die Fluidsteuerventile sowie über die anzusteuernde Bewegungseinrichtung an die Verarbeitungseinrichtung anhand einer, vorzugsweise drahtlos von der Verarbeitungseinrichtung auslesbaren, der Fluidsteuereinheit zugeordneten Codierung erfolgt. Hierbei kann vorgesehen sein, dass bei dem Auslesevorgang die Informationen diskret für jede Komponente des fluidischen Systems einzeln an die Verarbeitungseinrichtung bereitgestellt werden, beispielsweise durch Auslesen von drahtlos auslesbaren Funketiketten (RFID-Tags), die den einzelnen Komponenten zugeordnet sind. In diesem Fall kann es je nach Anzahl und Ausgestaltung der zur Verfügung stehenden Komponenten des fluidischen Systems erforderlich sein, dass der Benutzer bereits bei der Eingabe der jeweiligen Komponente oder in einem nachfolgenden Schritt dazu aufgefordert wird, die Verbindung/Verknüpfung der jeweils ermittelten Komponente mit anderen Komponenten anzugeben.

Alternativ kann vorgesehen sein, dass die Komponenten des fluidischen Systems, also die Fluidsteuereinheit, die Fluidsteuerventile und die Bewegungseinrichtung als werksseitig vorkonfektionierte Baugruppe ausgebildet sind und somit das Ab- oder Auslesen einer einzigen Teile- oder Bestellnummer oder einer anderen Bezeichnung dieser Baugruppe ausreichend ist, um diese in der Verarbeitungseinrichtung als Ganzes eindeutig identifizieren zu können. Vorzugsweise ist die Codierung optisch ablesbar ausgebildet, insbesondere in der Art eines Strichcodes oder eines Data-Matrix-Codes, der mit Hilfe einer, vorzugsweise in die Verarbeitungseinrichtung integrierten, Kamera und nachgeschalteter Bildverarbeitungssoftware auslesbar ist.

Vorteilhaft ist es, wenn die Verarbeitungseinrichtung die Informationen über die Fluidsteuereinheit, die Fluidsteuerventile und die Bewegungseinrichtung anhand der ausgelesenen Codierung, insbesondere über eine drahtgebundene oder drahtlose Verbindung, aus einer, vorzugsweise extern ausgebildeten, Datenbank abruft. Hierdurch kann die Verarbeitungseinrichtung die zur Ermittlung der möglichen Grundzustände für die Bewegungseinrichtung und/oder der möglichen Bewegungsabläufe notwenigen Informationen zusammenstellen. Vorteilhaft ist es, wenn diese Informationen aus einer externen Datenbank bezogen werden können, da in diesem Fall der Speicherplatz in der Verarbeitungseinrichtung gering gehalten werden kann. Bevorzugt werden die Informationen drahtlos, beispielsweise über eine Infrarot- oder Mobilfunkverbindung, insbesondere nach dem IRDA-Standard für Infrarotverbindungen oder exemplarisch nach einem der Mobilfunkstandards GSM, GPRS, EDGE, UMTS, HSPA oder LTE, von einer externen Datenbank bezogen.

In weiterer Ausgestaltung des Verfahrens ist vorgesehen, dass die Verarbeitungseinrichtung die möglichen Grundzustände der Bewegungseinrichtung und/oder die möglichen Bewegungsabläufe und/oder die zugehörigen Steuer- und/oder Regelungsparameter für die Fluidsteuereinheit und die damit verbundenen Fluidsteuerventile sowie die Bewegungseinrichtung, insbesondere über eine drahtgebundene oder drahtlose Verbindung, aus einer, vorzugsweise extern ausgebildeten, Datenbank abruft. Hierdurch werden der Speicherplatzbedarf und auch die zur Ermittlung der möglichen Grundzustände der Bewegungseinrichtung und/oder der möglichen Bewegungsabläufe notwendige Rechenleistung in der Verarbeitungseinrichtung weiter reduziert.

Bevorzugt sind zu wenigstens einem der von der Verarbeitungseinrichtung angezeigten möglichen Bewegungsabläufe wenigstens ein vom Benutzer einstellbarer Bewegungsparameter und/oder eine zusätzliche Bewegungsoption auswählbar und der Bewegungsparameter und/oder die Bewegungsoption werden nach erfolgter Einstellung und/oder Auswahl als zusätzlicher Parameter in die Steuer- und/oder Regelungsparameter für die Fluidsteuereinheit aufgenommen. Bei dem zusätzlichen Bewegungsparameter kann es sich exemplarisch um eine maximale Beschleunigung und/oder Geschwindigkeit für den ausgewählten Bewegungsablauf handeln. Bei der zusätzlichen Bewegungsoption kann es sich exemplarisch um eine Mittelstellung oder Zwischenstellung für eine Bewegung eines Linearstellers zwischen zwei Endstellungen handeln. Diese zusätzlichen Bewegungsparameter/Bewegungsoptionen werden nach Auswahl durch den Benutzer in die Konfigurationsdatei integriert und anschließend an die Fluidsteuereinheit bereitgestellt.

Bei einer vorteilhaften Weiterbildung des Verfahrens ist vorgesehen, dass von der Verarbeitungseinrichtung wenigstens ein Bewegungsablauf angezeigt wird, der eine Hinzufügung wenigstens einer von der Verarbeitungseinrichtung vorgebbaren Komponente, insbesondere einer Sensorkomponente, zur Fluidsteuereinheit und/oder zu den Fluidsteuerventilen und/oder zur Bewegungseinrichtung voraussetzt und als vom Benutzer einstellbare zusätzliche Bewegungsoption an der Verarbeitungseinrichtung auswählbar ist und nach erfolgter Auswahl in die Steuer- und/oder Regelungsparameter für die Fluidsteuereinheit aufgenommen wird. Beispielsweise kann vorgesehen sein, dass die zusätzliche Bewegungsoption auf der Anzeigeeinrichtung der Verarbeitungseinrichtung mit einem Hinweis angezeigt wird, dass derzeit eine Freischaltung und Verwendung nicht möglich ist und dass zunächst eine weitere Komponente beschafft und verbaut werden muss, dann aber die gewünschte Bewegungsoption freigeschaltet und verwendet werden kann. Alternativ kann vorgesehen sein, dass der Benutzer durch eine entsprechende Eingabe einen Grundzustand und/oder einen Bewegungsablauf für das fluidische System vorgibt und die Verarbeitungseinrichtung je nach Ausgestaltung des fluidischen Systems die entsprechende Programmierung oder Parametrierung vornimmt oder dem Bediener dem Hinweis gibt, dass zunächst eine oder mehrere Komponenten beschafft und verbaut werden müssen, um dann den gewünschten Grundzustand und/oder Bewegungsablauf freischalten zu können. Ergänzend oder alternativ kann auch vorgesehen sein, dass die Verarbeitungseinrichtung zunächst lediglich einige Basisfunktionen für Grundzustände und/oder Bewegungsabläufe angibt und weitere Funktionen, die ohne oder mit der Einbeziehung weiterer Komponenten durchgeführt werden können, nach kostenpflichtiger Freischaltung zur Verwendung freigibt.

Durch derartige Maßnahmen kann dem Benutzer in für ihn gut nachvollziehbarer Weise eine Leistungssteigerung/Leistungserweiterung des ihm zur Verfügung stehenden Fluidisches Systems angeboten werden. Beispielsweise kann dem Benutzer eine geschwindigkeitsgeregelte Bewegung der Bewegungseinrichtung angeboten werden, wenn sich der Benutzer damit einverstanden erklärt, die Bewegungseinrichtung um einen entsprechenden Sensor zur Geschwindigkeitsermittlung zu ergänzen.

Zweckmäßig ist es, wenn bei Auswahl desjenigen Bewegungsablaufs, der eine Hinzufügung wenigstens einer von der Verarbeitungseinrichtung vorgebbaren Komponente, insbesondere einer Sensorkomponente, zur Fluidsteuereinheit und/oder zu den Fluidsteuerventilen und/oder zur Bewegungseinrichtung voraussetzt, eine Ausgabe einer Komponenteninformation wie einer Teilenummer an den Benutzer erfolgt. Hierdurch wird der Benutzer in besonders einfacher Weise in die Lage versetzt, die von ihm gegebenenfalls gewünschte Leistungssteigerung/Leistungserweiterung des ihm zur Verfügung stehenden fluidischen Systems tatsächlich umzusetzen. Besonders bevorzugt ist es vorgesehen, dass die Verarbeitungseinrichtung unmittelbar nach Freigabe durch den Benutzer eine Bestellung der fehlenden Komponente auslösen kann, beispielsweise durch eine drahtlose Übertragung der Bestellung zum Anbieter der fehlenden Komponente. Ferner kann vorgesehen sein, dass der Anbieter der fehlenden Komponente mit der Lieferung der Komponente ein Etikett oder eine andere Repräsentation für die geänderte Codierung des fluidischen Systems bereitstellt, damit der Benutzer die Erweiterung des Funktionsumfangs in einfacher Weise in die Verarbeitungseinrichtung eingeben kann.

In weiterer Ausgestaltung des Verfahrens ist vorgesehen, dass die Fluidsteuereinheit den von der Verarbeitungseinrichtung vorgegebenen Grundzustand der Bewegungseinrichtung und/oder Bewegungsablauf und/oder zumindest teilweise die Steuer- und/oder Regelungsparameter an eine übergeordnete Steuerungseinrichtung, insbesondere eine speicherprogrammierbare Steuerung, überträgt. Hierdurch kann der übergeordneten Steuerungseinrichtung, bei der es sich beispielsweise um eine speicherprogammierbare Steuerung handelt, in einfacher Weise mitgeteilt werden, wie die Fluidsteuereinheit konfiguriert wurde, um gegebenenfalls entsprechende Anpassungen hinsichtlich der von der Steuereinrichtung an die Fluidsteuereinheit zu übertragenden Steuerbefehle in der Steuereinrichtung vornehmen zu können. Vorzugsweise ist eine direkte Kommunikation zwischen der Fluidsteuereinheit und der übergeordneten Steuerungseinrichtung, vorzugsweise über ein Bussystem, insbesondere über ein drahtloses Bussystem, vorgesehen.

Gemäß einem weiteren Erfindungsaspekt ist ein Datenträger mit einem Computerprogrammprodukt vorgesehen, das zur Ausführung von Verfahrensschritten des Verfahrens nach einem der vorhergehenden Ansprüche ausgebildet ist. Das Computerprogrammprodukt umfasst vorzugsweise alle notwendigen Eingabe- und Verarbeitungsschritte, um das Verfahren nach einem der Ansprüche 1 bis 8 durchzuführen. Vorzugsweise ist das Computerprogrammprodukt auf einem Internetserver gespeichert und kann von einem Benutzer über eine drahtgebundene oder drahtlose Datenverbindung auf eine als Benutzerendgerät wie einen persönlichen Computer, insbesondere in Form eines Tablet-Computers oder eines Smartphones, ausgebildete Verarbeitungseinrichtung übertragen werden, um dort ebenfalls auf einem Datenträger, beispielsweise einem internen Speicher, gespeichert zu werden. Bereits heute sind solche Benutzerendgeräte typischerweise so ausgerüstet, dass sie alle notwendigen Schritte zur Verfahrensdurchführung gemäß dem Computerprogrammprodukt ausführen können. Hierzu zählt insbesondere der Schritt der Bereitstellung von Informationen über die Fluidsteuereinheit, über die Fluidsteuerventile sowie über die anzusteuernde Bewegungseinrichtung anhand einer vorgebbaren Codierung, beispielsweise mit Hilfe einer eingebauten Kamera und eines Bildverarbeitungssoftwaremoduls, das entweder Teil des Computerprogrammprodukts ist oder das vom Computerprogrammprodukt angesprochen wird, um die Codierung aufzulösen und die Informationen über die Komponenten des fluidischen Systems ermitteln zu können. Ferner zählt hierzu der Schritt der Darstellung der möglichen Grundzustände der Bewegungseinrichtung und/oder Bewegungsabläufe, die mit Hilfe eines entsprechenden Bildschirms für den Benutzer visualisiert werden können. Zudem kann eine eingebaute Sende- und Empfangseinrichtung vorgesehen sein, mit deren Hilfe ein Datenaustausch mit dem fluidischen System und/oder einer externen Datenbank, insbesondere über eine drahtlose Internetverbindung, vorgenommen werden kann. Auch für eine Benutzereingabe sind üblicherweise die entsprechenden Eingabemittel bei derartigen Benutzerendgeräten vorhanden, beispielsweise in Form einer Tastatur oder eines berührungsempfindlichen Bildschirms.

Gemäß einem weiteren Erfindungsaspekt ist fluidisches System mit einer Fluidsteuereinheit und mit Fluidsteuerventilen und mit einer Bewegungseinrichtung und mit einer Verarbeitungseinrichtung vorgesehen, wobei die Fluidsteuereinheit zur Ansteuerung der Fluidsteuerventile ausgebildet ist und die Fluidsteuerventile für eine fluidische Ansteuerung der Bewegungseinrichtung ausgebildet sind und wobei die Verarbeitungseinrichtung zur Ermittlung und Verarbeitung von Informationen über die Fluidsteuereinheit, die Bewegungseinrichtung und die Fluidsteuerventile ausgebildet ist, wobei die Verarbeitungseinrichtung für ein Ermitteln und Anzeigen von möglichen Grundzuständen für die Bewegungseinrichtung und/oder von möglichen Bewegungsabläufen für die Bewegungseinrichtung anhand der bereitgestellten Informationen über die Fluidsteuereinheit und die Bewegungseinrichtung und die Fluidsteuerventile sowie für ein Auswählen eines Grundzustands für die Bewegungseinrichtung und/oder eines Bewegungsablaufs durch einen Benutzer mittels Eingabe an der Verarbeitungseinrichtung sowie für ein Erstellen und Übertragen einer für den ausgewählten Ventilgrundzustand und/oder den ausgewählten Bewegungsablauf spezifischen Konfigurationsdatei an die Fluidsteuereinheit ausgebildet ist, wobei die Konfigurationsdatei Steuer- und/oder Regelungsparameter für die Ansteuerung der Fluidsteuerventile zur Durchführung des ausgewählten Bewegungsablaufs umfasst.

Bei einer Weiterbildung des fluidischen Systems ist vorgesehen, dass die Verarbeitungseinrichtung in der Fluidsteuereinheit baulich integriert ausgebildet ist. Damit kann eine besonders kompakte bauliche Gestaltung des fluidischen Systems erreicht werden. Dabei kann eine drahtgebundene oder drahtlose Datenübertragung zwischen der Verarbeitungseinrichtung und der Fluidsteuereinheit vorgesehen werden.

Eine Beschreibung für die Durchführung des erfindungsgemäßen Verfahrens erfolgt anhand der Zeichnung. Hierbei zeigt:

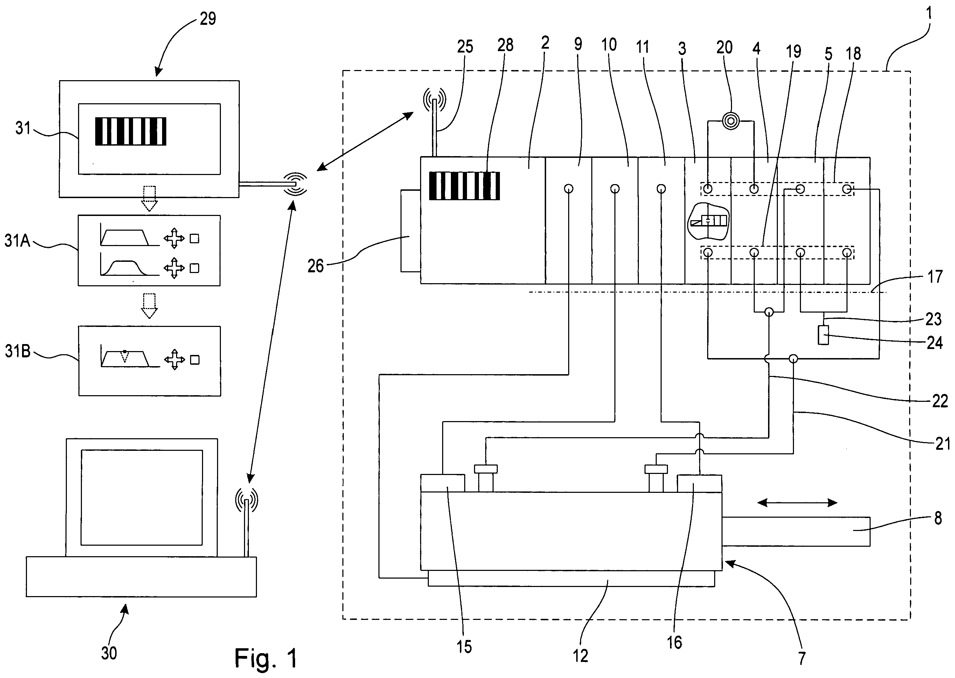

- Figur 1: eine schematische Darstellung eines fluidischen Systems, das eine Fluidsteuereinheit, mehrere Fluidsteuerventile sowie eine fluidisch betreibbare Bewegungseinrichtung umfasst.

Ein in der Figur 1 dargestelltes fluidisches System 1 umfasst exemplarisch eine Fluidsteuereinheit 2, mehrere Fluidsteuerventile 3, 4, 5, 6 und eine fluidisch betreibbare Bewegungseinrichtung 7. Beispielhaft ist die Bewegungseinrichtung 7 als Pneumatikzylinder ausgebildet und umfasst eine schiebebewegliche Kolbenstange 8, die je nach Druckbeaufschlagung der Bewegungseinrichtung 7 zwischen einer nicht dargestellten Ruheposition und einer in der Figur 1 dargestellten Arbeitsposition linearbeweglich verschiebbar ist. Ferner umfasst das fluidische System 1 mehrere Eingangs-Ausgangsmodule 9, 10, 11, die exemplarisch mit einem Positionssensor 12 bzw. mit Endlagensensoren 15, 16 elektrisch verbunden sind.

Beispielhaft ist es vorgesehen, dass die Fluidsteuereinheit 2, die Fluidsteuerventile 3, 4, 5 und 6 sowie die Eingangs-Ausgangsmodule 9, 10 und 11 längs einer Aufreihungsachse 17 aufgereiht sind und in nicht näher dargestellter Weise untereinander elektrisch gekoppelt sind, beispielsweise über ein internes Buskommunikationssystem oder eine elektrische Multipolverbindung.

Die Fluidsteuerventile 3, 4, 5 und 6 weisen jeweils einen Eingangsanschluss 18 und einen Ausgangsanschluss 19 auf. Exemplarisch sind die Eingangsanschlüsse 18 und die Ausgangsanschlüsse 19 der beispielhaft als 2/2-Wegeventile ausgebildeten Fluidsteuerventile 3, 4, 5 und 6 in der nachstehend angegebenen Weise miteinander verbunden, um eine fluidische Vollbrückenanordnung zu bilden, die eine Vielzahl von unterschiedlichen Ansteuerungsmöglichkeiten bietet, um die Bewegungseinrichtung 7 fluidisch zu versorgen und gewünschte Bewegungsabläufe durchführen zu können. Andere Ventilvarianten wie 3/3-Wegeventile können ergänzend oder alternativ eingesetzt werden.

Beispielhaft sind bei den Fluidsteuerventilen 3, 4, 5 und 6 die ersten Eingangsanschlüsse 18 des ersten und des zweiten Fluidsteuerventils 3, 4 mit einer Fluidquelle 20, insbesondere einer Druckluftquelle, verbunden. Der Ausgangsanschluss 19 des ersten Fluidsteuerventils 3 und der Eingangsanschluss 18 des vierten Fluidsteuerventils 6 sind mit einem ersten Arbeitskanal 21 verbunden, der seinerseits mit einer ersten, nicht näher dargestellten Arbeitskammer der Bewegungseinrichtung 7 fluidisch verbunden ist. Der Ausgangsanschluss 19 des zweiten Fluidsteuerventils 4 und der Eingangsanschluss 18 des dritten Fluidsteuerventils 5 sind mit einem zweiten Arbeitskanal 22 verbunden sind, der seinerseits mit einer zweiten, nicht näher dargestellten Arbeitskammer der Bewegungseinrichtung 7 fluidisch verbunden ist. Die Ausgangsanschlüsse 19 des dritten und des vierten Fluidsteuerventils 5, 6 sind mit einem Entlüftungskanal 23 verbunden, der exemplarisch endseitig mit einem Schalldämpfer 24 versehen ist.

Die Fluidsteuereinheit 2 ist exemplarisch mit einer Funkeinrichtung 25 versehen, die für einen drahtlosen Datenempfang, beispielsweise zum Empfang einer Konfigurationsdatei ausgebildet ist. Ferner umfasst die Fluidsteuereinheit 2 eine Busschnittstelle 26, die eine drahtgebundene oder drahtlose Datenübertragungsverbindung mit einem nicht dargestellten Bussystem und einer ebenfalls nicht dargestellten übergeordneten Steuerungseinrichtung, insbesondere einer speicherprogrammierbaren Steuerung, ermöglicht. Bei einer nicht dargestellten Ausführungsform ist vorgesehen, dass eine übergeordnete Steuerungseinrichtung für einen drahtgebundenen oder drahtlosen Empfang der Konfigurationsdatei ausgebildet ist und dass die Konfigurationsdatei nach dem Empfang durch die Steuerungseinrichtung über das Bussystem an die Fluidsteuereinheit weitergeleitet wird.

Für eine Konfiguration der Fluidsteuereinheit 2 ist die folgende Vorgehensweise vorgesehen. Zunächst wird von einem Benutzer eine Verarbeitungseinrichtung 29, bei der es sich exemplarisch um ein Smartphone, also ein Mobiltelefon mit integriertem Computer, handelt, für die Durchführung des Verfahrens aktiviert. Hierzu kann der Benutzer ein Computerprogrammprodukt, also ein Softwaremodul, in der Verarbeitungseinrichtung 29 speichern, dass beispielsweise über eine Mobilfunkverbindung von einem ebenfalls als Computer ausgeführten Server 30 abrufbar ist. Anschließend erfolgt eine Speicherung des Computerprogrammprodukts in der Verarbeitungseinrichtung 29 und gegebenenfalls eine Installation des Computerprogrammprodukts auf der Verarbeitungseinrichtung 29. Dann kann der Benutzer in einem ersten Verfahrensschritt die Informationen über die Fluidsteuereinheit 2, über die Fluidsteuerventile 3, 4, 5 und 6 sowie über die Bewegungseinrichtung 7 in die Verarbeitungseinrichtung 29 eingeben. Hierzu wird beispielhaft eine an der Fluidsteuereinheit 2 angebrachte Strichcodierung 28 mit einer in der Verarbeitungseinrichtung 29 eingebauten, nicht näher dargestellten Kamera abfotografiert. Dies ist durch die Darstellung des Bildschirms 31 der Verarbeitungseinrichtung symbolisiert.

In einem nachfolgenden Verarbeitungsschritt wird die Strichcodierung 28 von der Verarbeitungseinrichtung 29 gemäß einer vorgebbaren Konvention in eine numerische Codierung umgewandelt, diese wird anschließend von der Verarbeitungseinrichtung 29 drahtlos an den Server 30 übertragen. Der Server 30 kann je nach Ausgestaltung des auf der Verarbeitungseinrichtung 29 ablaufenden Computerprogrammprodukts die Informationen über das fluidische System 1 aus einer Datenbank an die Verarbeitungseinrichtung 29 zur Verfügung stellen. In diesem Fall wird in der Verarbeitungseinrichtung eine Ermittlung von möglichen Grundzuständen der Bewegungseinrichtung 7 und/oder der möglichen Bewegungsabläufe für die Bewegungseinrichtung 7 durchgeführt. Alternativ stellt der Server 30 aus einer Datenbank die möglichen Grundzustände der Bewegungseinrichtung 7 und die damit verknüpften Ventilgrundzustände der Fluidsteuerventile 3, 4, 5 und 6 und/oder die möglichen Bewegungsabläufe für die Bewegungseinrichtung 7 an die Verarbeitungseinrichtung 29 zur Verfügung.

Jedenfalls werden in einem nachgelagerten Schritt die möglichen Grundzustände der Bewegungseinrichtung 7, denen die damit verknüpften Ventilgrundzustände der Fluidsteuerventile 3, 4, 5 und 6 zugrundeliegen, und/oder die möglichen Bewegungsabläufe für die Bewegungseinrichtung 7 auf dem einzeln dargestellten Bildschirm 31A in der Art von Bewegungs-Zeitdiagrammen dargestellt. Andere Arten der graphischen Repräsentation und /oder der Eingabe der Grundzustände und der Bewegungsabläufe können ergänzend oder alternativ vorgesehen sein.

Nun kann der Benutzer in Abhängigkeit von der mit der Bewegungseinrichtung 7 zu lösenden Bewegungsaufgabe eine Auswahl unter den angezeigten möglichen Grundzuständen der Bewegungseinrichtung 7 und/oder den möglichen Bewegungsabläufen für die Bewegungseinrichtung 7 treffen. Hierzu kann der Bediener beispielsweise eine Auswahl an dem berührempfindlich ausgeführten Bildschirm 31/31A der Verarbeitungseinrichtung 29 treffen. Zudem kann der Benutzer den Bewegungsablauf in einfacher Weise durch Anwählen der auf dem Bildschirm 31A dargestellten Pfeiltaste beeinflussen, beispielsweise die Zeitdauer des Ausfahrvorgangs und/oder die maximale Ausfahrgeschwindigkeit. Die Auswahl des jeweiligen Bewegungsablaufs erfolgt durch den Benutzer durch Anwählen eines exemplarisch neben der jeweiligen Pfeiltaste auf dem Bildschirm 31A angeordneten Betätigungsfelds. Auf dem Bildschirm 31B wird dann nur noch der ausgewählte Bewegungsablauf dargestellt. Hier kann der Benutzer durch Betätigen der Pfeiltaste weiteren Einfluss auf den Bewegungsablauf nehmen, beispielsweise eine zeitweilige Geschwindigkeitsreduzierung für den Ausfahrvorgang und nach erfolgter Definition des Bewegungsablaufs erneut das Betätigungsfeld anwählen, um den Auswahlvorgang zu beenden. In gleicher oder ähnlicher Weise kann vom Benutzer auch die Konfiguration des Einfahrvorgangs für die Kolbenstange 8 vorgenommen werden.

Anschließend wird von der Verarbeitungseinrichtung 29 entweder durch interne Datenverarbeitung oder durch Datenaustausch mit dem Server 30 eine für den ausgewählten Grundzustand der Bewegungseinrichtung 7 und/oder den ausgewählten Bewegungsablauf spezifische Konfigurationsdatei für die Fluidsteuereinheit 2 erstellt und vorzugsweise drahtlos an die Fluidsteuereinheit 2 übertragen. Hierzu kann die Funkeinrichtung 25 der Fluidsteuereinheit 2 genutzt werden, die beispielsweise als Nahbereichs-Funkeinrichtung nach dem Bluetooth-Standard ausgebildet sein kann. Die Konfigurationsdatei enthält insbesondere Steuer- und/oder Regelungsparameter für die Ansteuerung der Fluidsteuerventile 3, 4, 5, und 6 zur Einstellung der ausgewählten Grundstellung der Bewegungseinrichtung anhand des damit verknüpften Ventilgrundzustands und/oder zur Durchführung des ausgewählten Bewegungsablaufs durch die Bewegungseinrichtung.

In einem weiteren Schritt werden die Steuer- und/oder Regelungsparameter aus der Konfigurationsdatei in der Fluidsteuereinheit 2 zur Ansteuerung der Fluidsteuerventile 3, 4, 5 und 5 zur Einstellung des ausgewählten Grundzustands der Bewegungseinrichtung 7 und/oder zur Ausführung des ausgewählten Bewegungsablaufs verwendet.

Ergänzend kann vorgesehen sein, dass die Fluidsteuereinheit 2 den von der Verarbeitungseinrichtung 29 vorgegebenen Grundzustand der Bewegungseinrichtung 7 und/oder den ausgewählten Bewegungsablauf und/oder zumindest teilweise die Steuer- und/oder Regelungsparameter über die Busschnittstelle 26 an eine übergeordnete Steuerungseinrichtung überträgt, damit diese das ausgewählte Verhalten des fluidischen Systems 1 bei der Erzeugung von Steuerbefehlen für das fluidische System 1 und/oder für andere anzusteuernde Komponenten berücksichtigen kann.

## Patentansprüche

1. Verfahren zur Konfiguration einer Fluidsteuereinheit (2), die zur Ansteuerung von Fluidsteuerventilen (3, 4, 5, 6) für eine fluidisch betreibbare Bewegungseinrichtung (7) ausgebildet ist, mit den Schritten: Bereitstellen von Informationen über die Fluidsteuereinheit (2) und über eine von der Fluidsteuereinheit (2) anzusteuernde Bewegungseinrichtung (7) und über mit der Bewegungseinrichtung (7) verbundene Fluidsteuerventile (3, 4, 5, 6) an eine Verarbeitungseinrichtung (29), Ermitteln und Anzeigen von möglichen Grundzuständen für die Bewegungseinrichtung (7) anhand der bereitgestellten Informationen über die Fluidsteuereinheit (2) und die Bewegungseinrichtung (7) und die Fluidsteuerventile (3, 4, 5, 6) und Auswählen eines Grundzustands für die Bewegungseinrichtung (7) durch einen Benutzer mittels Eingabe an der Verarbeitungseinrichtung (29), Erstellen und Übertragen einer für den ausgewählten Grundzustand der Bewegungseinrichtung (7) spezifischen Konfigurationsdatei von der Verarbeitungseinrichtung (29) an die Fluidsteuereinheit (2), wobei die Konfigurationsdatei Regelungsparameter für die Ansteuerung der Fluidsteuerventile (3, 4, 5, 6) zur Einstellung des ausgewählten Grundzustands für die Bewegungseinrichtung (7) umfasst, Verwenden der Regelungsparameter aus der Konfigurationsdatei in der Fluidsteuereinheit (2) zur Ansteuerung der Fluidsteuerventile (3, 4, 5, 6) zur Einstellung des ausgewählten Grundzustands der Bewegungseinrichtung (7).

2. Verfahren zur Konfiguration einer Fluidsteuereinheit (2), die zur Ansteuerung von Fluidsteuerventilen (3, 4, 5, 6) für eine fluidisch betreibbare Bewegungseinrichtung (7) ausgebildet ist, mit den Schritten: Bereitstellen von Informationen über die Fluidsteuereinheit (2) und über eine von der Fluidsteuereinheit (2) anzusteuernde Bewegungseinrichtung (7) und über mit der Bewegungseinrichtung (7) verbundene Fluidsteuerventile (3, 4, 5, 6) an eine Verarbeitungseinrichtung (29), Ermitteln und Anzeigen von möglichen Bewegungsabläufen für die Bewegungseinrichtung (7) anhand der bereitgestellten Informationen über die Fluidsteuereinheit (2) und die Bewegungseinrichtung (7) und die Fluidsteuerventile (3, 4, 5, 6) und Auswählen eines Bewegungsablaufs durch einen Benutzer mittels Eingabe an der Verarbeitungseinrichtung (29), Erstellen und Übertragen einer für den ausgewählten Bewegungsablauf spezifischen Konfigurationsdatei von der Verarbeitungseinrichtung (29) an die Fluidsteuereinheit (2), wobei die Konfigurationsdatei Regelungsparameter für die Ansteuerung der Fluidsteuerventile (3, 4, 5, 6) zur Durchführung des ausgewählten Bewegungsablaufs umfasst, Verwenden der Regelungsparameter aus der Konfigurationsdatei in der Fluidsteuereinheit (2) zur Ansteuerung der Fluidsteuerventile (3, 4, 5, 6) zur Ausführung des ausgewählten Bewegungsablaufs.

3. Verfahren nach Anspruch 1, **dadurch gekennzeichnet, dass** mögliche Bewegungsabläufe für die Bewegungseinrichtung (7) anhand der bereitgestellten Informationen über die Fluidsteuereinheit (2) und die Bewegungseinrichtung (7) und die Fluidsteuerventile (3, 4, 5, 6) ermittelt und angezeigt werden und dass eine Auswahl eines Bewegungsablaufs durch einen Benutzer mittels Eingabe an der Verarbeitungseinrichtung (29) vorgenommen wird und dass eine Erstellung und Übertragung einer für den ausgewählten Bewegungsablauf spezifischen Konfigurationsdatei von der Verarbeitungseinrichtung (29) an die Fluidsteuereinheit (2) vorgenommen wird, wobei die Konfigurationsdatei Regelungsparameter für die Ansteuerung der Fluidsteuerventile (3, 4, 5, 6) zur Durchführung des ausgewählten Bewegungsablaufs umfasst, und dass die Regelungsparameter aus der Konfigurationsdatei in der Fluidsteuereinheit (2) zur Ansteuerung der Fluidsteuerventile (3, 4, 5, 6) zur Ausführung des ausgewählten Bewegungsablaufs verwendet werden.

4. Verfahren nach Anspruch 1, 2 oder 3, **dadurch gekennzeichnet, dass** die Konfigurationsdatei Steuerparameter für die Ansteuerung der Fluidsteuerventile (3, 4, 5, 6) aufweist und dass die Steuerparameter aus der Konfigurationsdatei in der Fluidsteuereinheit (2) zur Ansteuerung der Fluidsteuerventile (3, 4, 5, 6) eingesetzt werden.

5. Verfahren nach Anspruch 1, 2 oder 4, **dadurch gekennzeichnet, dass** die Bereitstellung von Informationen über die Fluidsteuereinheit (2), über die Fluidsteuerventile (3, 4, 5, 6) sowie über die anzusteuernde Bewegungseinrichtung (7) an die Verarbeitungseinrichtung (29) anhand einer, vorzugsweise drahtlos von der Verarbeitungseinrichtung (29) auslesbaren, der Fluidsteuereinheit (7) zugeordneten Codierung (28) erfolgt.

6. Verfahren nach Anspruch 5, **dadurch gekennzeichnet, dass** die Verarbeitungseinrichtung (29) die Informationen über die Fluidsteuereinheit (2), die Fluidsteuerventile (3, 4, 5, 6) und die Bewegungseinrichtung (7) anhand der ausgelesenen Codierung (28), insbesondere über eine drahtgebundene oder drahtlose Verbindung, aus einer, vorzugsweise extern ausgebildeten, Datenbank abruft.

7. Verfahren nach Anspruch 1 oder 3, **dadurch gekennzeichnet, dass** die Verarbeitungseinrichtung (29) die möglichen Grundzustände der Bewegungseinrichtung (7) und/oder die zugehörigen Regelungsparameter für die Fluidsteuereinheit (2) und die damit verbundenen Fluidsteuerventile (3, 4, 5, 6) sowie die Bewegungseinrichtung (7), insbesondere über eine drahtgebundene oder drahtlose Verbindung, aus einer, vorzugsweise extern ausgebildeten, Datenbank abruft.

8. Verfahren nach Anspruch 2, 3 oder 7, **dadurch gekennzeichnet, dass** die Verarbeitungseinrichtung (29) die möglichen Bewegungsabläufe und/oder die zugehörigen Regelungsparameter für die Fluidsteuereinheit (2) und die damit verbundenen Fluidsteuerventile (3, 4, 5, 6) sowie die Bewegungseinrichtung (7), insbesondere über eine drahtgebundene oder drahtlose Verbindung, aus einer, vorzugsweise extern ausgebildeten, Datenbank abruft.

9. Verfahren nach Anspruch 2 oder 3, **dadurch gekennzeichnet, dass** zu wenigstens einem der von der Verarbeitungseinrichtung (29) angezeigten möglichen Bewegungsabläufe wenigstens ein vom Benutzer einstellbarer Bewegungsparameter und/oder eine zusätzliche Bewegungsoption auswählbar sind und der Bewegungsparameter und/oder die Bewegungsoption nach erfolgter Einstellung und/oder Auswahl als zusätzlicher Parameter in die Regelungsparameter für die Fluidsteuereinheit (2) aufgenommen wird.

10. Verfahren nach einem der Ansprüche 2, 3 oder 9, **dadurch gekennzeichnet, dass** von der Verarbeitungseinrichtung (29) wenigstens ein Bewegungsablauf angezeigt wird, der eine Hinzufügung wenigstens einer von der Verarbeitungseinrichtung (29) vorgebbaren Komponente, insbesondere einer Sensorkomponente, zur Fluidsteuereinheit (2) und/oder zu den Fluidsteuerventilen (3, 4, 5, 6) und/oder zur Bewegungseinrichtung (7) voraussetzt und als vom Benutzer einstellbare zusätzliche Bewegungsoption an der Verarbeitungseinrichtung (29) auswählbar ist und nach erfolgter Auswahl in die Regelungsparameter für die Fluidsteuereinheit (2) aufgenommen wird.

11. Verfahren nach Anspruch 10, **dadurch gekennzeichnet, dass** bei Auswahl desjenigen Bewegungsablaufs, der eine Hinzufügung wenigstens einer von der Verarbeitungseinrichtung (29) vorgebbaren Komponente, insbesondere einer Sensorkomponente, zur Fluidsteuereinheit (2) und/oder zu den Fluidsteuerventilen (3, 4, 5, 6) und/oder zur Bewegungseinrichtung voraussetzt eine Ausgabe einer Komponenteninformation wie einer Teilenummer an den Benutzer erfolgt.

12. Verfahren nach einem der Ansprüche 2, 3, 9 oder 10, **dadurch gekennzeichnet, dass** die Fluidsteuereinheit (2) den von der Verarbeitungseinrichtung (29) vorgegebenen Grundzustand der Bewegungseinrichtung (7) und/oder Bewegungsablauf und/oder zumindest teilweise die Regelungsparameter an eine übergeordnete Steuerungseinrichtung, insbesondere eine speicherprogrammierbare Steuerung, überträgt.

13. Datenträger mit einem Computerprogrammprodukt, das zur Ausführung von Verfahrensschritten des Verfahrens nach einem der vorhergehenden Ansprüche ausgebildet ist.

14. Fluidisches System mit einer Fluidsteuereinheit (2) und mit Fluidsteuerventilen (3, 4, 5, 6) und mit einer Bewegungseinrichtung (7) und mit einer Verarbeitungseinrichtung (29), wobei die Fluidsteuereinheit (2) zur Ansteuerung der Fluidsteuerventile (3, 4, 5, 6) ausgebildet ist und die Fluidsteuerventile (3, 4, 5, 6) für eine fluidische Ansteuerung der Bewegungseinrichtung (7) ausgebildet sind und wobei die Verarbeitungseinrichtung (29) zur Ermittlung und Verarbeitung von Informationen über die Fluidsteuereinheit (2), die Bewegungseinrichtung (7) und die Fluidsteuerventile (3, 4, 5, 6) ausgebildet ist, **dadurch gekennzeichnet, dass** die Verarbeitungseinrichtung (29) für ein Ermitteln und Anzeigen von möglichen Grundzuständen für die Bewegungseinrichtung (7) anhand der bereitgestellten Informationen über die Fluidsteuereinheit (2) und die Bewegungseinrichtung (7) und die Fluidsteuerventile (3, 4, 5, 6) sowie für ein Auswählen eines Grundzustands für die Bewegungseinrichtung (7) durch einen Benutzer mittels Eingabe an der Verarbeitungseinrichtung (29) sowie für ein Erstellen und Übertragen einer für den ausgewählten Grundzustand für die Bewegungseinrichtung (7) spezifischen Konfigurationsdatei an die Fluidsteuereinheit (2) ausgebildet ist, wobei die Konfigurationsdatei Regelungsparameter für die Ansteuerung der Fluidsteuerventile (3, 4, 5, 6) zur Einstellung des ausgewählten Grundzustands umfasst.

15. Fluidisches System mit einer Fluidsteuereinheit (2) und mit Fluidsteuerventilen (3, 4, 5, 6) und mit einer Bewegungseinrichtung (7) und mit einer Verarbeitungseinrichtung (29), wobei die Fluidsteuereinheit (2) zur Ansteuerung der Fluidsteuerventile (3, 4, 5, 6) ausgebildet ist und die Fluidsteuerventile (3, 4, 5, 6) für eine fluidische Ansteuerung der Bewegungseinrichtung (7) ausgebildet sind und wobei die Verarbeitungseinrichtung (29) zur Ermittlung und Verarbeitung von Informationen über die Fluidsteuereinheit (2), die Bewegungseinrichtung (7) und die Fluidsteuerventile (3, 4, 5, 6) ausgebildet ist, **dadurch gekennzeichnet, dass** die Verarbeitungseinrichtung (29) für ein Ermitteln und Anzeigen von möglichen Bewegungsabläufen für die Bewegungseinrichtung (7) anhand der bereitgestellten Informationen über die Fluidsteuereinheit (2) und die Bewegungseinrichtung (7) und die Fluidsteuerventile (3, 4, 5, 6) sowie für ein Auswählen eines Bewegungsablaufs durch einen Benutzer mittels Eingabe an der Verarbeitungseinrichtung (29) sowie für ein Erstellen und Übertragen einer für den ausgewählten Bewegungsablauf spezifischen Konfigurationsdatei an die Fluidsteuereinheit (2) ausgebildet ist, wobei die Konfigurationsdatei Regelungsparameter für die Ansteuerung der Fluidsteuerventile (3, 4, 5, 6) zur Durchführung des ausgewählten Bewegungsablaufs für die Bewegungseinrichtung (7) umfasst.

16. Fluidisches System nach Anspruch 14, **dadurch gekennzeichnet, dass** die Verarbeitungseinrichtung (29) für ein Ermitteln und Anzeigen von möglichen Bewegungsabläufe für die Bewegungseinrichtung (7) anhand der bereitgestellten Informationen über die Fluidsteuereinheit (2) und die Bewegungseinrichtung (7) und die Fluidsteuerventile (3, 4, 5, 6) und für eine Auswahl eines Bewegungsablaufs durch einen Benutzer mittels Eingabe an der Verarbeitungseinrichtung (29) sowie für eine Erstellung und Übertragung einer für den ausgewählten Bewegungsablauf spezifischen Konfigurationsdatei von der Verarbeitungseinrichtung (29) an die Fluidsteuereinheit (2) ausgebildet ist, wobei die Konfigurationsdatei Regelungsparameter für die Ansteuerung der Fluidsteuerventile (3, 4, 5, 6) zur Durchführung des ausgewählten Bewegungsablaufs umfasst.

17. Fluidisches System nach Anspruch 16, **dadurch gekennzeichnet, dass** die Konfigurationsdatei Steuerparameter für die Ansteuerung der Fluidsteuerventile (3, 4, 5, 6) umfasst.

18. Fluidisches System nach Anspruch 14 oder 15, **dadurch gekennzeichnet, dass** die Verarbeitungseinrichtung (29) in der Fluidsteuereinheit (2) baulich integriert ausgebildet ist.

## Claims

1. Method for configuring a fluid control unit (2) designed for the control of fluid control valves (3, 4, 5, 6) for a fluid-operated moving device (7), the method comprising the steps of: provision of information on the fluid control unit (2) and on the moving device (7) to be controlled by the fluid control unit (2) and on the fluid control valves (3, 4, 5, 6) connected to the moving device (7) to a processing device (29), determination and indication of possible basic states of the moving device (7) using the information provided on the fluid control unit (2) and on the moving device (7) and on the fluid control valves (3, 4, 5, 6), and selection of a basic state of the moving device (7) by a user by means of an input at the processing device (29), provision and transmission of a configuration file specific to the selected basic state of the moving device (7) from the processing device (29) to the fluid control unit (2), the configuration file including closed-loop control parameters for the control of the fluid control valves (3, 4, 5, 6) for adjusting the selected basic state of the moving device (7), use of the closed-loop control parameters from the configuration file in the fluid control unit (2) for controlling the fluid control valves (3, 4, 5, 6) for adjusting the selected basic state of the moving device (7).

2. Method for configuring a fluid control unit (2) designed for the control of fluid control valves (3, 4, 5, 6) for a fluid-operated moving device (7), the method comprising the steps of: provision of information on the fluid control unit (2) and on the moving device (7) to be controlled by the fluid control unit (2) and on the fluid control valves (3, 4, 5, 6) connected to the moving device (7) to a processing device (29), determination and indication of possible movement sequences for the moving device (7) using the information provided on the fluid control unit (2) and on the moving device (7) and on the fluid control valves (3, 4, 5, 6), and selection of a movement sequence by a user by means of an input at the processing device (29), provision and transmission of a configuration file specific to the selected movement sequence from the processing device (29) to the fluid control unit (2), the configuration file including closed-loop control parameters for the control of the fluid control valves (3, 4, 5, 6) for carrying out the selected movement sequence, use of the closed-loop control parameters from the configuration file in the fluid control unit (2) for controlling the fluid control valves (3, 4, 5, 6) for carrying out the selected movement sequence.

3. Method according to claim 1, **characterized in that** possible movement sequences for the moving device (7) using the information provided on the fluid control unit (2) and on the moving device (7) and on the fluid control valves (3, 4, 5, 6) are determined and indicated, and **in that** a selection of a movement sequence by a user by means of an input at the processing device (29) is executed and **in that** a provision and transmission of a configuration file specific to the selected movement sequence from the processing device (29) to the fluid control unit (2) is executed, the configuration file including closed-loop control parameters for the control of the fluid control valves (3, 4, 5, 6) for carrying out the selected movement sequence and **in that** the closed-loop control parameters from the configuration file in the fluid control unit (2) for controlling the fluid control valves (3, 4, 5, 6) are used for carrying out the selected movement sequence.

4. Method according to claim 1, 2 or 3, **characterized in that** the configuration file includes open-loop parameters for controlling the fluid control valves (3, 4, 5, 6) and **in that** the open-loop parameters from the configuration file are used for controlling the fluid control valves (3, 4, 5, 6).

5. Method according to claim 1, 2 or 4, **characterized in that** information on the fluid control unit (2), the fluid control valves (3, 4, 5, 6) and the moving device (7) to be controlled is made available to the processing device (29) using a coding (28) which is assigned to the fluid control unit (2) and which can preferably read out by the processing device (29) using wireless means.

6. Method according to claim 5, **characterized in that** the processing device (29) retrieves the information on the fluid control unit (2), the fluid control valves (3, 4, 5, 6) and the moving device (7) from a preferably external data base using the read-out coding (28), in particular via a hard-wired or wireless link.

7. Method according to claim 1 or 3, **characterized in that** the processing device (29) retrieves the possible basic states of the moving device (7) and/or the associated closed-loop control parameters for the fluid control unit (2) and the fluid control valves (3, 4, 5, 6) and the moving device (7) connected thereto from a preferably external data base, in particular via a hard-wired or wireless link.

8. Method according to claim 2, 3 or 7, **characterized in that** the processing device (29) retrieves the possible movement sequences and/or the associated closed-loop control parameters for the fluid control unit (2) and the fluid control valves (3, 4, 5, 6) and the moving device (7) connected thereto from a preferably external data base, in particular via a hard-wired or wireless link.

9. Method according to claim 2 or 3, **characterized in that**, for at least one of the possible movement sequences indicated by the processing device (29), at least one movement parameter which can be adjusted by the user and/or an additional movement option is/are selectable, and the movement parameter and/or the movement option is/are included as additional parameter(s) in the closed-loop control parameters for the fluid control unit (2) following their adjustment and/or control.

10. Method according to claim 2, 3 or 9, **characterized in that** the processing device (29) indicates at least one movement sequence which requires an addition of at least one component presettable by the processing device (29), in particular a sensor component, to the fluid control unit (2) and/or to the fluid control valves (3, 4, 5, 6) and/or to the moving device (7) and which is selectable at the processing device (29) as a user-adjustable additional movement option and, after control, included in the closed-loop control parameters for the fluid control unit (29).

11. Method according to claim 10, **characterized in that** a component information, such as a part number, is output to the user when selecting the movement sequence which requires an addition of at least one component presettable by the processing device (29), in particular a sensor component, to the fluid control unit (2) and/or to the fluid control valves (3, 4, 5, 6) and/or to the moving device (7).

12. Method according to claim 2, 3, 9 or 10, **characterized in that** the fluid control (2) unit transmits the basic state of the moving device (7) and/or the movement sequence preset by the processing device (29) and/or at least a part of the closed-loop control parameters to a higher-order control unit, in particular a programmable controller.

13. Storage medium with a computer program product, which is designed for the execution of steps of the method according to any of the preceding claims.

14. Fluidic system comprising a fluid control unit (2), fluid control valves (3, 4, 5, 6) and a moving device (7) as well as a processing device (29), wherein the fluid control unit (2) is designed for the control of the fluid control valves (3, 4, 5, 6) and the fluid control valves (3, 4, 5, 6) are designed for a fluidic control of the moving device (7), and wherein the processing device (29) is designed for the determination and processing of information on the fluid control unit (2), the moving device (7) and the fluid control valves (3, 4, 5, 6), **characterized in that** the processing device (29) is designed for a determination and indication of possible basic states for the moving device (7), using the information provided on the fluid control unit (2), the moving device (7) and the fluid control valves (3, 4, 5, 6), and for a control of a basic state for the moving device (7) selected by the user by means of input at the processing device (29), as well as for a provision and transmission to the fluid control unit (2) of a configuration file specific to the selected basic state for the moving device (7), the configuration file comprising closed-loop control parameters for the control of the fluid control valves (3, 4, 5, 6) for adjusting the selected basic state of the moving device (7).

15. Fluidic system comprising a fluid control unit (2), fluid control valves (3, 4, 5, 6) and a moving device (7) as well as a processing device (29), wherein the fluid control unit (2) is designed for the control of the fluid control valves (3, 4, 5, 6) and the fluid control valves (3, 4, 5, 6) are designed for a fluidic control of the moving device (7), and wherein the processing device (29) is designed for the determination and processing of information on the fluid control unit (2), the moving device (7) and the fluid control valves (3, 4, 5, 6), **characterized in that** the processing device (29) is designed for a determination and indication of possible movement sequences for the moving device (7), using the information provided on the fluid control unit (2), the moving device (7) and the fluid control valves (3, 4, 5, 6), and for a control of a movement sequence selected by the user by means of input at the processing device (29), as well as for a provision and transmission of a configuration file specific to the selected movement sequence to the fluid control unit (2), the configuration file comprising closed-loop control parameters for the control of the fluid control valves (3, 4, 5, 6) for carrying out the selected movement sequence.

16. Fluidic system according to claim 14, **characterized in that** the processing device (29) is designed for the determination and processing of possible movement sequences for the moving device (7), using the information provided on the fluid control unit (2), the moving device (7) and the fluid control valves (3, 4, 5, 6), and for a selection of a possible movement sequence by a user by means of input at the processing device (29) as well as for a provision and transmission of a configuration file specific to the selected movement sequence from the processing device (29) to the fluid control unit (2), the configuration file comprising closed-loop control parameters for the control of the fluid control valves (3, 4, 5, 6) for carrying out the selected movement sequence.

17. Fluidic system according to claim 16, **characterized in that** the configuration file comprising open-loop control parameters for the control of the fluid control valves (3, 4, 5, 6).

18. Fluidic system according to claim 14 or 15, **characterized in that** the processing device (29) is structurally integrated into the fluid control unit (2).

## Revendications

1. Procédé servant à configurer une unité de commande fluidique (2), qui est réalisée pour piloter des soupapes de commande fluidique (3, 4, 5, 6) pour un dispositif de déplacement (7) pouvant fonctionner de manière fluidique, avec les étapes de : mise à disposition à un dispositif de traitement (29) d'informations portant sur l'unité de commande fluidique (2) et sur un dispositif de déplacement (7) à piloter par l'unité de commande fluidique (2) et sur des soupapes de commande fluidique (3, 4, 5, 6) reliées au dispositif de déplacement (7), détermination et affichage d'éventuels états de base pour le dispositif de déplacement (7) à l'aide des informations mises à disposition portant sur l'unité de commande fluidique (2) et le dispositif de déplacement (7) et les soupapes de commande fluidique (3, 4, 5, 6) et sélection d'un état de base pour le dispositif de déplacement (7) par un utilisateur au moyen d'une entrée au dispositif de traitement (29), création et transmission d'un fichier de configuration spécifique à l'état de base sélectionné du dispositif de déplacement (7) du dispositif de traitement (29) à l'unité de commande fluidique (2), dans lequel le fichier de configuration comprend des paramètres de régulation pour le pilotage des soupapes de commande fluidique (3, 4, 5, 6) servant à régler l'état de base sélectionné pour le dispositif de déplacement (7), utilisation des paramètres de régulation issus du fichier de configuration dans l'unité de commande fluidique (2) pour piloter les soupapes de commande fluidique (3, 4, 5, 6) pour régler l'état de base sélectionné du dispositif de déplacement (7).

2. Procédé servant à configurer une unité de commande fluidique (2), qui est réalisée pour piloter des soupapes de commande fluidique (3, 4, 5, 6) pour un dispositif de déplacement (7) pouvant fonctionner de manière fluidique, avec les étapes de : mise à disposition à un dispositif de traitement (29) d'informations portant sur l'unité de commande fluidique (2) et sur un dispositif de déplacement (7) à piloter par l'unité de commande fluidique (2) et sur des soupapes de commande fluidique (3, 4, 5, 6) reliées au dispositif de déplacement (7), détermination et affichage d'éventuelles séquences de déplacements pour le dispositif de déplacement (7) à l'aide des informations mises à disposition portant sur l'unité de commande fluidique (2) et le dispositif de déplacement (7) et les soupapes de commande fluidique (3, 4, 5, 6) et sélection d'une séquence de déplacements par un utilisateur au moyen d'une entrée au niveau du dispositif de traitement (29), création et transmission d'un fichier de configuration spécifique à la séquence de déplacements sélectionnée du dispositif de traitement (29) à l'unité de commande fluidique (2), dans lequel le fichier de configuration comprend des paramètres de régulation pour le pilotage des soupapes de commande fluidique (3, 4, 5, 6) servant à mettre en oeuvre la séquence de déplacements sélectionnée, utilisation des paramètres de régulation issus du fichier de configuration dans l'unité de commande fluidique (2) pour piloter les soupapes de commande fluidique (3, 4, 5, 6) pour exécuter la séquence de déplacements sélectionnée.

3. Procédé selon la revendication 1, **caractérisé en ce que** d'éventuelles séquences de déplacements sont déterminées et affichées pour le dispositif de déplacement (7) à l'aide des informations mises à disposition portant sur l'unité de commande fluidique (2) et le dispositif de déplacement (7) et les soupapes de commande fluidique (3, 4, 5, 6), et qu'une sélection d'une séquence de déplacements est entreprise par un utilisateur au moyen d'une entrée au niveau du dispositif de traitement (29), et qu'une création et transmission d'un fichier de configuration spécifique à la séquence de déplacements sélectionnée sont entreprises du dispositif de traitement (29) à l'unité de commande fluidique (2), dans lequel le fichier de configuration comprend des paramètres de régulation pour le pilotage des soupapes de commande fluidique (3, 4, 5, 6) servant à mettre en oeuvre la séquence de déplacements sélectionnée, et que les paramètres de régulation issus du fichier de configuration sont utilisés dans l'unité de commande fluidique (2) pour piloter les soupapes de commande fluidique (3, 4, 5, 6) pour exécuter la séquence de déplacements sélectionnée.

4. Procédé selon la revendication 1, 2 ou 3, **caractérisé en ce que** le fichier de configuration présente des paramètres de commande pour le pilotage des soupapes de commande fluidique (3, 4, 5, 6), et que les paramètres de commande issus du fichier de configuration sont utilisés dans l'unité de commande fluidique (2) pour piloter les soupapes de commande fluidique (3, 4, 5, 6).

5. Procédé selon la revendication 1, 2 ou 4, **caractérisé en ce que** la mise à disposition au dispositif de traitement (29) d'informations portant sur l'unité de commande fluidique (2), portant sur les soupapes de commande fluidique (3, 4, 5, 6) et portant sur le dispositif de déplacement (7) à piloter a lieu à l'aide d'un codage (28) associé à l'unité de commande fluidique (7), de préférence pouvant être lu sans fil par le dispositif de traitement (29) .

6. Procédé selon la revendication 5, **caractérisé en ce que** le dispositif de traitement (29) consulte à l'aide du codage (28) lu, en particulier par l'intermédiaire d'une liaison filaire ou sans fil, depuis une base de données réalisée de préférence de manière externe, les informations portant sur l'unité de commande fluidique (2), les soupapes de commande fluidique (3, 4, 5, 6) et le dispositif de déplacement (7).

7. Procédé selon la revendication 1 ou 3, **caractérisé en ce que** le dispositif de traitement (29) consulte, en particulier par l'intermédiaire d'une liaison filaire ou sans fil, depuis une base de données réalisée de préférence de manière externe, les éventuels états de base du dispositif de déplacement (7) et/ou les paramètres de régulation associés pour l'unité de commande fluidique (2) et les soupapes de commande fluidique (3, 4, 5, 6) reliées à cette dernière ainsi que pour le dispositif de déplacement (7).

8. Procédé selon la revendication 2, 3 ou 7, **caractérisé en ce que** le dispositif de traitement (29) consulte, en particulier par l'intermédiaire d'une liaison filaire ou sans fil, depuis une base de données réalisée de préférence de manière externe, les éventuelles séquences de déplacements et/ou les paramètres de régulation associés pour l'unité de commande fluidique (2) et les soupapes de commande fluidique (3, 4, 5, 6) reliées à cette dernière ainsi que pour le dispositif de déplacement (7).

9. Procédé selon la revendication 2 ou 3, **caractérisé en ce qu'**au moins un paramètre de déplacement pouvant être réglé par l'utilisateur et/ou une option de déplacement supplémentaire peuvent être sélectionnés pour au moins une des séquences de déplacements éventuelles affichées par le dispositif de traitement (29), et le paramètre de déplacement et/ou l'option de déplacement sont intégrés, une fois le réglage et/ou la sélection réalisés avec succès, en tant qu'un paramètre supplémentaire dans les paramètres de régulation pour l'unité de commande fluidique (2).

10. Procédé selon l'une quelconque des revendications 2, 3 ou 9, **caractérisé en ce qu'**est affichée par le dispositif de traitement (29) au moins une séquence de déplacements, qui implique un ajout d'au moins une composante pouvant être spécifiée par le dispositif de traitement (29), en particulier d'une composante de capteur, concernant l'unité de commande fluidique (2) et/ou concernant les soupapes de commande fluidique (3, 4, 5, 6) et/ou concernant le dispositif de déplacement (7) et peut être sélectionnée au niveau du dispositif de traitement (29) en tant qu'une option de déplacement supplémentaire pouvant être réglée et est intégrée, une fois la sélection réalisée avec succès, dans les paramètres de régulation pour l'unité de commande fluidique (2).

11. Procédé selon la revendication 10, **caractérisé en ce que** lors de la sélection de la séquence de déplacements, qui précisément implique un ajout d'au moins une composante pouvant être spécifiée par le dispositif de traitement (29), en particulier d'une composante de capteur, concernant l'unité de commande fluidique (2) et/ou concernant les soupapes de commande fluidique (3, 4, 5, 6) et/ou concernant le dispositif de déplacement, un envoi d'une information de composante telle qu'un numéro de référence à l'utilisateur a lieu.

12. Procédé selon l'une quelconque des revendications 2, 3, 9 ou 10, **caractérisé en ce que** l'unité de commande fluidique (2) transmet l'état de base spécifié par le dispositif de traitement (29), du dispositif de déplacement (7) et/ou la séquence de déplacements et/ou au moins en partie les paramètres de régulation à un dispositif de commande supérieur, en particulier une commande à mémoire programmable.

13. Support de données avec un produit-programme informatique, qui est réalisé pour exécuter des étapes de procédé du procédé selon l'une quelconque des revendications précédentes.

14. Système fluidique avec une unité de commande fluidique (2) et avec des soupapes de commande fluidique (3, 4, 5, 6) et avec un dispositif de déplacement (7) et avec un dispositif de traitement (29), dans lequel l'unité de commande fluidique (2) est réalisée pour piloter la soupape de commande fluidique (3, 4, 5, 6) et les soupapes de commande fluidique (3, 4, 5, 6) sont réalisées pour un pilotage fluidique du dispositif de déplacement (7) et dans lequel le dispositif de traitement (29) est réalisé pour déterminer et traiter des informations portant sur l'unité de commande fluidique (2), le dispositif de déplacement (7) et les soupapes de commande fluidique (3, 4, 5, 6), **caractérisé en ce que** le dispositif de traitement (29) est réalisé pour une détermination et un affichage d'éventuels états de base pour le dispositif de déplacement (7) à l'aide des informations mises à disposition portant sur l'unité de commande fluidique (2) et le dispositif de déplacement (7) et les soupapes de commande fluidique (3, 4, 5, 6) ainsi que pour une sélection d'un état de base pour le dispositif de déplacement (7) par un utilisateur au moyen d'une entrée au niveau du dispositif de traitement (29) ainsi que pour une création et une transmission à l'unité de commande fluidique (2) d'un fichier de configuration spécifique à l'état de base sélectionné pour le dispositif de déplacement (7), dans lequel le fichier de configuration comprend des paramètres de régulation pour le pilotage des soupapes de commande fluidique (3, 4, 5, 6) servant à régler l'état de base sélectionné pour le dispositif de déplacement (7).

15. Système fluidique avec une unité de commande fluidique (2) et avec des soupapes de commande fluidique (3, 4, 5, 6) et avec un dispositif de déplacement (7) et avec un dispositif de traitement (29), dans lequel l'unité de commande fluidique (2) est réalisée pour piloter les soupapes de commande fluidique (3, 4, 5, 6) et les soupapes de commande fluidique (3, 4, 5, 6) sont réalisées pour un pilotage fluidique du dispositif de déplacement (7) et dans lequel le dispositif de traitement (29) est réalisé pour déterminer et traiter des informations portant sur l'unité de commande fluidique (2), le dispositif de déplacement (7) et les soupapes de commande fluidique (3, 4, 5, 6), **caractérisé en ce que** le dispositif de traitement (29) est réalisé pour une détermination et un affichage d'éventuelles séquences de déplacements pour le dispositif de déplacement (7) à l'aide des informations mises à disposition portant sur l'unité de commande fluidique (2) et le dispositif de déplacement (7) et les soupapes de commande fluidique (3, 4, 5, 6) ainsi que pour une séquence de déplacements par un utilisateur au moyen d'une entrée au niveau du dispositif de traitement (29) ainsi que pour une création et une transmission à l'unité de commande fluidique (2) d'un fichier de configuration spécifique à la séquence de déplacements sélectionnée, dans lequel le fichier de configuration comprend des paramètres de régulation pour le pilotage des soupapes de commande fluidique (3, 4, 5, 6) aux fins de la mise en oeuvre de la séquence de déplacements sélectionnée.

16. Système fluidique selon la revendication 14, **caractérisé en ce que** le dispositif de traitement (29) est réalisé pour une détermination et un affichage d'éventuelles séquences de déplacements pour le dispositif de déplacement (7) à l'aide des informations mises à disposition portant sur l'unité de commande fluidique (2) et le dispositif de déplacement (7) et les soupapes de commande fluidique (3, 4, 5, 6) et pour une sélection d'une séquence de déplacements par un utilisateur au moyen d'une entrée au niveau du dispositif de traitement (29) ainsi que pour une création et une transmission par le dispositif de traitement (29) à l'unité de commande fluidique (2) d'un fichier de configuration spécifique à la séquence de déplacements sélectionnée, dans lequel le fichier de configuration comprend des paramètres de régulation pour le pilotage des soupapes de commande fluidique (3, 4, 5, 6) servant à la mise en oeuvre de la séquence de déplacements sélectionnée.

17. Système fluidique selon la revendication 16, **caractérisé en ce que** le fichier de configuration comprend des paramètres de commande pour le pilotage des soupapes de commande fluidique (3, 4, 5, 6).

18. Système fluidique selon la revendication 14 ou 15, **caractérisé en ce que** le dispositif de traitement (29) est réalisé de manière intégrée sur le plan structurel dans l'unité de commande fluidique (2).
